# EUROPEAN PATENT SPECIFICATION

(11) **EP 2 311 310 B1**
(45) Date of publication and mention of the grant of the patent: **13.06.2018**
(21) Application number: 10174213.8
(22) Date of filing: 26.08.2010
(51) Int. Cl.: A01G 3/06

(54) **Extension handle for a gardening trimmer**
Verlängerungsgriff für ein Gartenschnittgerät
Extension de manche pour débroussailleuse de jardin

(30) Priority: 24.09.2009 JP 2009219335; 24.09.2009 JP 2009219336
(43) Date of publication of application: 20.04.2011
(73) Proprietor: Makita Corporation, Anjo, Aichi 446-8502 (JP)
(72) Inventor: Kamiya, Takahiro, Anjo Aichi 446-8502 (JP); Umemura, Shingo, Anjo Aichi 446-8502 (JP); Sugita, Fumihide, Anjo Aichi 446-8502 (JP); Kanie, Mayumi, Anjo Aichi 446-8502 (JP)
(74) Representative: Kramer Barske Schmidtchen Patentanwälte PartG mbB

(56) References cited:
- EP-A1- 1 479 285
- EP-A1- 2 177 102
- US-A- 3 759 020
- US-A- 3 805 385

## Description

The present invention relates to an extension handle for a handheld gardening trimmer.

US 3,805,385 A discloses an extension handle for a gardening member.

Japanese Patent Application publication No. 2007-15089 discloses an extension handle for a handheld gardening trimmer. The extension handle comprises a main pole, a grip unit disposed at one end of the main pole, and an attachment unit disposed at the other end of the main pole. The grip unit is configured to be held by a user, and the attachment unit is configured to be detachably attached to the gardening trimmer. The grip unit comprises an operable member configured to be operated by the user.

The extension handle further comprises a power supply cable for supplying electric power from an external power source to the gardening trimmer. Electric power starts to be supplied from the external power source to the gardening trimmer when the user operates the operable member to turn on and electric power is shut off when the user operates the operable member to turn off. It is noted that the attachment unit is configured to maintain a driving switch of the gardening trimmer to be in an on state. Thus, the gardening trimmer starts or stops in response to the user's operation on the operable member.

According to the conventional extension handle, the user can start or stop the gardening trimmer fixed to the attachment unit by operating the operable member of the grip unit. However, this configuration can be feasible only in a case in which the gardening trimmer is powered from an external power source. In a case where the gardening trimmer is a cordless type, the cordless type gardening trimmer can not be started or stopped even if the user operates the operable member of the grip unit. The gardening trimmer attached with the attachment unit may keep on driving by having the driving switch of the gardening trimmer maintain in the on state. Therefore, the conventional extension handle is not convenient for the user of the cordless type gardening trimmer.

According to the conventional extension handle, the user may easily trim the lawn by the handheld gardening trimmer without bending over. However, when the user moves the gardening trimmer back and forth on the lawn, the angle of the extension handle with respect to the ground may change, and thus, the angle of the gardening trimmer with respect to the ground may also change. In this case, the user may not trim the lawn uniformly. Therefore, the user has to pay attention to the angle of the extension handle while moving the gardening trimmer back and forth, and thus, the conventional extension handle is not easy to use accordingly.

It is an object of the present teachings to disclose a easy-to-use extension handle for the gardening trimmers.

This object can be solved by providing an extension handle according to claim 1.

In one aspect of the present teachings, a grip unit preferably comprises an operable member configured to be operated by the user, and an attachment unit preferably comprises a movable member configured to operate a driving switch of the gardening trimmer in conjunction with movement of the operable member.

In another aspect of the present teachings, an attachment unit preferably comprises a joint mechanism configured to be capable of adjusting an angle of the main pole with respect to the attachment unit in at least two angles. In this case, it is more preferable that the joint mechanism is configured to swingably support the main pole within a predetermined angular range after the angle of the main pole is adjusted to one of the at least two angles.

In one preferred embodiment of the present teachings, an extension handle for the gardening trimmer may comprise a main pole, a grip unit disposed at one end of the main pole, and an attachment unit disposed at the other end of the main pole. The grip unit may be configured to be held by a user, and the attachment unit may be configured to be detachably attached to the gardening trimmer. The grip unit may comprise an operable member configured to be operated by the user, and the attachment unit may comprise a movable member configured to operate a driving switch of the gardening trimmer in conjunction with movement of the operable member.

In this extension handle, the movable member of the attachment unit may directly operate the driving switch of the gardening trimmer when the user operates the operable member of the grip unit. Therefore, the extension handle may be used for any types of gardening trimmers including, but not limited to, gardening trimmers having a power supply cord, cordless gardening trimmers (battery-powered gardening trimmers) and engine-driven gardening trimmers.

In addition or in the alternative, the attachment unit may preferably comprise a joint mechanism configured to be capable of adjusting an angle of the main pole with respect to the attachment unit in at least two angles. In this case, it is preferable that the joint mechanism is also configured to swingably support the main pole within a predetermined angular range after the angle of the main pole is adjusted to one of the at least two angles.

In this extension handle, the user may generally adjust the angle of the main pole with respect to the attachment unit, for example, in accordance with his/her height. And after the adjustment, when the user moves the gardening trimmer back and forth on the ground, main pole may passively swing with respect to the attachment unit and the angle of the gardening trimmer with respect to the ground may keep the appropriate angle. Therefore, the user may easily trim the lawn at uniform lengths.
Fig. 1 shows an extension handle and a gardening trimmer in a first embodiment.
Fig. 2 shows a plan view of the gardening trimmer.
Fig. 3 shows a diagrammatic perspective view of the gardening trimmer.
Fig. 4 shows an interior configuration of a grip unit.
Fig. 5 shows a diagrammatic perspective view of an attachment unit with which a movable cover is closed.
Fig. 6 shows a diagrammatic perspective view of the attachment unit with which the movable cover is opened.
Fig. 7 shows a movable lever.
Fig. 8 shows the movable lever at a normal position.
Fig. 9 shows the movable lever moved from the normal position.
Fig. 10 is a cross-sectional view showing a grip clamping portion from its front.
Fig. 11 shows the attachment unit to which the gardening trimmer is fixed.
Fig. 12 is a cross-sectional view at line XII-XII in Fig. 11.
Fig. 13 is a cross-sectional view at line XIII-XIII in Fig. 11.
Fig. 14 is similar to Fig. 13 except that the movable lever is moved from the normal position.
Fig. 15 is a cross-sectional view at line XV-XV in Fig. 11.
Fig. 16 is the cross-sectional view showing an interior configuration of a joint mechanism (a lock off button located at a lock position).
Fig. 17 is a cross-sectional view showing the interior configuration of the joint mechanism (the lock off button located at an unlock position).
Fig. 18A shows a front side of the lock off button and Fig. 18B shows a back side of the lock off button.
Fig. 19 shows an inside of a right case which faces a flange of the lock off button.
Fig. 20 shows a plug portion formed at an end face of a base end of a pole fixed member.
Fig. 21 shows the extension handle attached to the gardening trimmer having a power source cord.
Fig. 22 shows an interior configuration of the attachment unit of the extension handle in a second embodiment.
Fig. 23A shows a front view of the movable lever in the second embodiment, and Fig. 23B shows a side view of the movable lever in the second embodiment.
Fig. 24 shows the attachment unit to which the gardening trimmer is fixed in the second embodiment (the movable member located at the normal position).
Fig. 25 is the cross-sectional view at line XXV-XXV in Fig. 24.
Fig. 26 shows the attachment unit in which the movable member moved from the position shown in Fig 24.
Fig. 27 is a cross-sectional view at line XXVII-XXVII in Fig. 26.
Fig. 28 shows the attachment unit in which the movable member moved further from the position shown in Fig 26.
Fig. 29 is a cross-sectional view at line XXIX-XXIX in Fig. 28.
Fig. 30 schematically shows the configuration of the attachment unit in a third embodiment.
Fig. 31 shows the attachment unit in which a wave lever deforms and moves from the configuration shown in Fig. 30.
Fig. 32 shows the attachment unit in which the wave lever further deforms and moves from the configuration shown in Fig. 31.

In one embodiment of the present teachings, an attachment unit may preferably be configured to move a lock off switch of a gardening trimmer to an unlock position when the attachment unit is attached to the gardening trimmer. It is noted that, the lock off switch of the gardening trimmer is one type of interlock devices that prevent an erroneous operation of a driving switch. The driving switch can be operated to turn-on only in a case where the lock off switch is operated to the unlock position. According to this configuration, an extension handle can have the driving switch of the gardening trimmer be operated even if the gardening trimmer has the lock off switch.

In the alternative, the attachment unit may preferably have a second movable member configured to operate the lock off switch of the gardening trimmer in conjunction with the movement of an operable member. According to the configuration, the erroneous operation of the driving switch and/or an erroneous start of the gardening trimmer can be prevented because the lock off switch is operated only in a case where the user operates the operable member. It is noted that the second movable member may be integrally provided with the first movable member.

In another embodiment of the present teachings, the attachment unit may preferably comprise at least two holding portions. One of the holding portions may be configured to hold a grip of the gardening trimmer and the other may be configured to hold a portion of the gardening trimmer other than the grip. According to this configuration, the attachment unit can be fixed firmly with the gardening trimmer. This configuration enables the movable member of the attachment unit to have the driving switch of the gardening trimmer be unfailingly operated.

In another embodiment of the present teachings, the attachment unit may preferably have a contact portion configured to contact to a surface that is trimmed by the gardening trimmer. It is noted that "the surface that is trimmed by the gardening trimmer" may typically be a ground. According to the configuration, the user may stabilize an attitude of the gardening trimmer by contacting the contact portion with the surface. Thus, the user can easily move the gardening trimmer along a working surface.

In yet another embodiment of the present teachings, a joint mechanism may preferably have the lock off member. In this case, the lock off member may be operated between the lock position and the unlock position by the user. The lock off member may prohibit adjustment of the angle of the main pole when the lock off member is located at the lock position, and may permit the adjustment of the angle of the main pole when the lock off member is located at the unlock position.

The lock off member may preferably be coaxially arranged with a center axis of the joint mechanism. According to the configuration, the position of the lock off member may not be moved even if the angle of the main pole with respect to the attachment unit changes. Therefore, the user may easily adjust the angle of the main pole while operating the lock off member.

According to the above mentioned embodiments, the attachment unit can have a first fixed member be fixed to the main pole, and a second fixed member which is configured to be fixed to the gardening trimmer. In this case, the second fixed member may be rotatably connected to the first fixed member so as to constitute the joint mechanism. The lock off member may be configured to move to the lock position and engage with one of the first and second fixed members when the angle of the main pole is adjusted to any one of at least two angles. Furthermore, the other of the first and second fixed members may be configured to rotatably support the lock off member engaging with the one of the first and second fixed members within a predetermined angular range.

In this configuration, the angle of the main pole may be adjusted between the second fixed member and the lock off member, and the attachment unit may passively swing between the first fixed member and the lock off member. The mechanism for adjusting the angle of the main pole and the mechanism for passively swinging the attachment unit are provided separately. Therefore, a design suitable for each of the mechanisms may be employed independently. For example, an angular range of passively swinging the attachment unit can be designed larger than an angular range for adjusting the angle of the main pole.

In one embodiment of the present teachings, the main pole is constructed from a hollow tube. A control cable extending from the grip unit to the attachment unit is provided inside the main pole. The control cable comprises an inner cable and an outer cable. One end of the inner cable is connected to the operable member of the grip unit and another end of the inner cable is connected to the movable member of the attachment unit. The outer cable is formed by a tubular member. The outer cable slidably supports the inner cable at an inside of the outer cable.

In one embodiment of the present teachings, the attachment unit may have a grip holding portion and a support holding portion. The grip holding portion holds the grip of the gardening trimmer. The support holding portion is fixed to a grip support which forms a loop and is connected to the grip.

In one embodiment of the present teachings, the attachment unit may have a penetrating member that penetrates the gardening trimmer. The penetrating member may prevent the gardening trimmer from detaching from the attachment unit even in a case where a fixing between the gardening trimmer and the attachment unit are loosened. The penetrating member may be a fastener (such as a bolt or a screw) that penetrates the gardening trimmer and fasten clamping portions of the attachment unit each other. The clamping portions of the attachment unit clamp the gardening trimmer.

In one embodiment of the present teachings, the joint mechanism of the attachment unit may have a lock off button. The user can release the lock which prohibits adjusting the angle of the joint mechanism by pushing the lock off button. In addition to, or in the alternative of the lock off button, the joint mechanism may have another type of lock off member. The lock off member may be configured to release the lock of the joint mechanism when the user pulls the lock off member. Alternatively, the lock off member may be configured to release the lock of the joint mechanism when the user turns the lock off member.

In one embodiment of the present teachings, the attachment unit may comprise a pole fixed member to which the main pole is fixed. The pole fixed member supports the lock off button. A plug portion is formed on the pole fixed member. The plug portion extends towards the lock off member and the plug portion is inserted into a socket hole formed in the lock off button. The plug portion and the socket hole have a square shaped cross section. In other words, shapes of the cross sections of the plug portion and the socket hole are not true circles. Furthermore, a clearance (a gap) is provided between the plug portion and the socket hole. Therefore, the pole fixed member and the lock off button can rotate each other within a predetermined angular range. It should be noted that the shapes of cross sections of the plug portion and the socket hole are not limited to the squares. The shapes may be other types of polygons, ellipses, or long circles. Furthermore, on the contrary, the plug portion may alternatively be formed on the lock off button and the socket hole may be formed in the pole fixed member.

In the above mentioned embodiments of the present teachings, the attachment unit may further comprise a tool fixed member configured to be fixed to the gardening trimmer. In this case, the tool fixed member is rotatably connected to the pole fixed member and can configure the aforementioned joint mechanism. A plurality of engaging grooves may be formed on the tool fixed member along a direction of rotation with respect to the pole fixed member. Furthermore, the lock off button may have a rib. The rib selectively engages with either one of the engaging grooves depending on the angle of the tool fixed member with respect to the pole fixed member. This configuration enables the angle of the main pole with respect to the attachment unit to be adjusted in either one of multiple steps. The engaging grooves formed in the tool fixed member may be alternated by concaved portions having other shapes. Also, the rib formed on the lock off button may be alternated by a convex portion having other shape. On the contrary to the embodiment, a plurality of concaved portions may alternatively be formed in the lock off button and at least one convex portion which can engage with one of the concaved portions may be formed on the pole fixed member.

### (Embodiment 1)

An extension handle 10 of the first embodiment and an garden trimmer 200 which can employ the extension handle 10 will be explained with reference to the drawings. The gardening trimmer 200 is a kind of a handheld electric power tool and mainly used for trimming a lawn. The extension handle 10 can attach to or detach from the gardening trimmer 200. By utilizing the extension handle 10, a user can trim the lawn 4 on a ground 2 in a standing position, or can trim the lawn 4 on a yard where the user can not reach. Furthermore, the gardening trimmer 200 can also be used for trimming a hedge. By using the extension handle 10, the user can trim a range of the hedge where the user can not reach by the gardening trimmer 200.

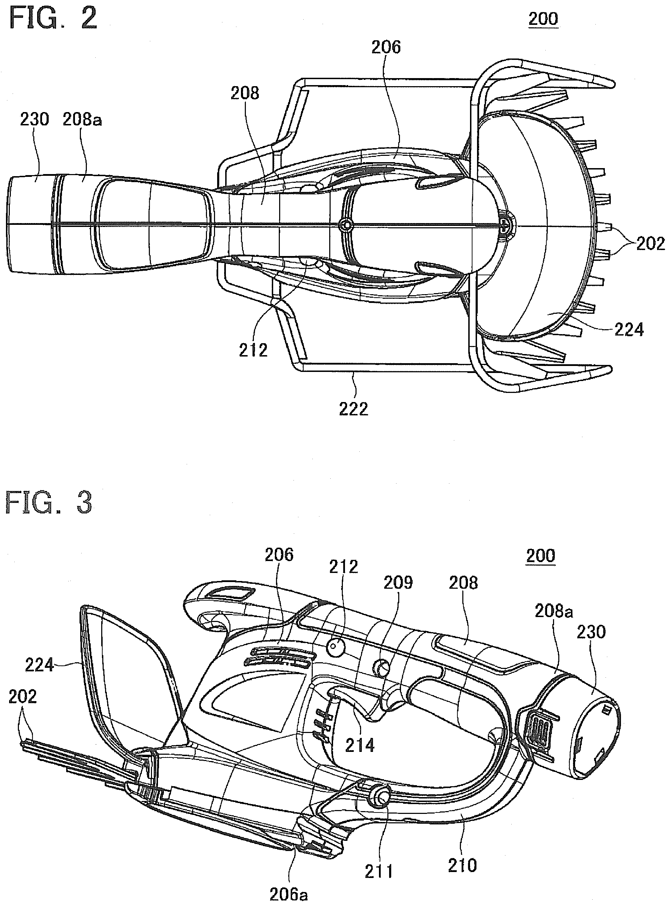

First, the gardening trimmer 200 will be explained with reference to Figs. 2 and 3. The gardening trimmer 200 is an electric power tool which employs a battery pack 230 as a power source. The gardening trimmer 200 comprises a trimmer main body 206 and a pair of shear blades 202 disposed at a front of the trimmer main body 206. The pair of shear blades 202 is detachably attached to a bottom surface 206a of the trimmer main body 206. The pair of shear blades 202 is driven by a motor (not shown) provided in the trimmer main body 206.

A grip 208 which the user grasps is provided on the trimmer main body 206. The grip 208 extends backward from the trimmer main body 206. The battery pack 230 is inserted at a rear end 208a of the grip 208.

The grip 208 has a trigger switch 214 and a lock off switch 212. The trigger switch 214 is a driving switch for driving the gardening trimmer 200. The user can drive the gardening trimmer 200 by pulling the trigger switch 214. The lock off switch 212 is a switch which prevents an erroneous operation of the trigger switch 214. Normally, the lock off switch 212 is located at a lock position, and prohibits a movement of the trigger switch 214. When the user pushes the lock off switch 212, the lock off switch 212 moves to the unlock position and the movement of the trigger switch 214 is permitted. In other words, the trigger switch 214 is configured not operable unless the user pushes the lock off switch 212. The user starts the gardening trimmer 200 by pulling the trigger switch 214 while pushing the lock off switch 212.

A grip support 210 for supporting the grip 208 is provided on the trimmer main body 206. The grip support 210 is disposed below the grip 208. The grip support 210 extends backward from the trimmer main body 206, curves upward, and connects with the rear end 208a of the grip 208. That is to say, the grip 208 and the grip support 210 extend from the trimmer main body 206 with forming a loop. The grip support 210 strengthens the grip 208 and also protects fingers of the user grasping the grip 208

A concave portion 209 is provided on the grip 208. Further, a through hole 211 is provided on the grip support 210. Though it will be described in detail later, the concave portion 209 and the through hole 211 engage with the extension handle 10 when the extension handle 10 is attached to the gardening trimmer 200. The concave portion 209 and the through hole 211 prevent from being attached the extension handle 10 to the gardening trimmer 200 at a wrong position.

A chip guard 224 and a guide frame 222 are proved on the trimmer main body 206. Note that the guide frame 222 is removed in Fig. 3. The chip guard 224 is disposed above the pair of shear blades 202. The chip guard 224 prevents chipped lawn, branches and/or leaves from flying towards the user. While the user trims the lawn 4 on the ground 2, the position and/or attitude of the gardening trimmer 200 is stabilized by contacting the guide frame 222 to the ground 2 or a wall.

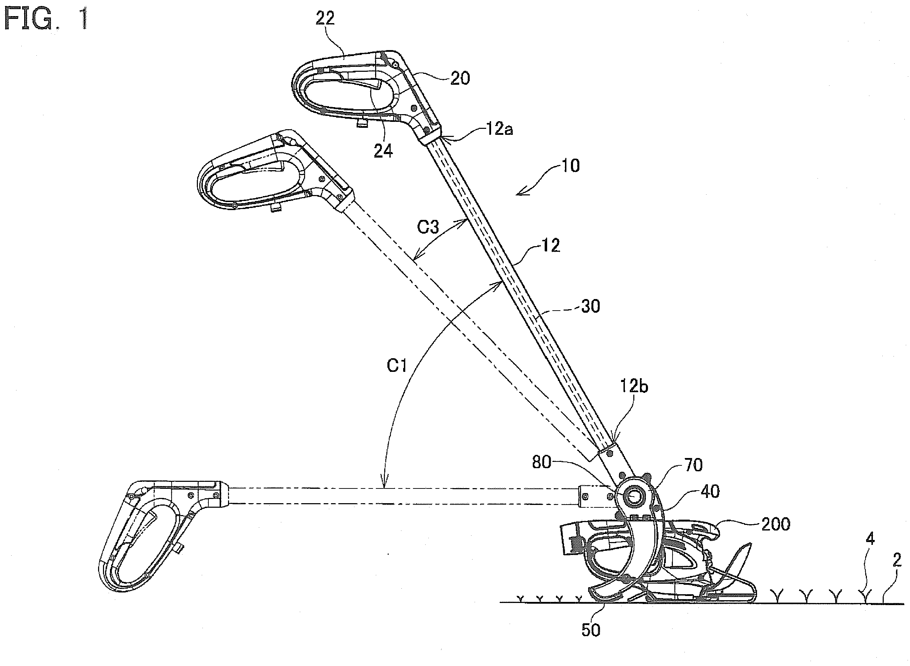

Next, the extension handle 10 will be explained. As shown in Fig. 1, the extension handle 10 comprises a main pole 12, a grip unit 20, and an attachment unit 40. The grip unit 20 is provided at one end 12a of the main pole 12. The attachment unit 40 is provided at another end 12b of the main pole 12. The grip unit 20 is grasped by the user. The attachment unit 40 is fixed to the gardening trimmer 200. The user trims the lawn 4 on the ground 2 while the user grasps the grip unit 20 and moves the gardening trimmer 200 fixed to the other end 12b of the main pole 12 along the ground 2.

The main pole 12 is constructed from a hollow tube. A control cable 30 is disposed inside the main pole 12. The control cable 30 extends from the grip unit 20 to the attachment unit 40.

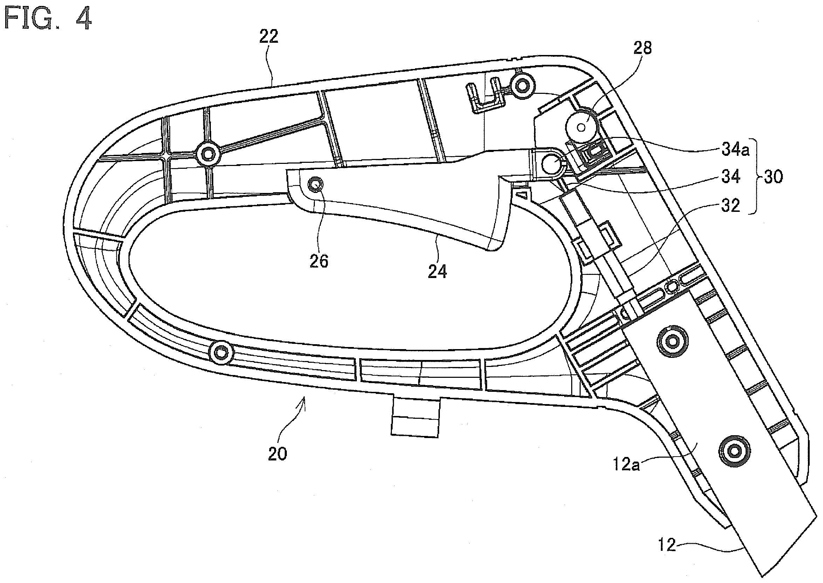

Fig. 4 shows a configuration inside the grip unit 20. As shown in Figs. 1 and 4, the grip unit 20 has a grip 22 which is grasped by the user. An operable member 24 which is operated by the user is provided on the grip 22. The operable member 24 has a trigger type configuration and is swingably supported with being centered at a support pin 26. As described later, the gardening trimmer 200 which is attached to the attachment unit 40 starts when the user pulls the operable member 24 from a normal position, and on the other hand, the gardening trimmer 200 stops when the user returns the operable member 24 to the normal position.

It is noted that the grip unit 20 may have a safety device which prevents the operable member 24 from an erroneous operation. In this embodiment, a lock off button 28 is provided similarly to the gardening trimmer 200. The lock off button is operated between a lock position and an unlock position by the user. The operation of the operable member 24 is prohibited or invalidated when the lock off button 28 locates at the lock position. The operation of the operable member 24 is permitted or validated when the lock off button 28 locates at the unlock position.

As shown in Fig. 4, the control cable 30 comprises an outer cable 32 and an inner cable 34. The outer cable 32 is formed by a tubular member. The inner cable 34 passes inside the tubular member. The outer cable 32 is fixed to the grip unit 20. The inner cable 34 is made by a metal wire. The inner cable 34 is slidably supported by the outer cable 32. One end 34a of the inner cable 34 is connected to the operable member 24. According to this configuration, the operation applied to the operable member 24 from the user is transmitted to the attachment unit 40 through the inner cable 34.

As shown in Fig. 1, the attachment unit 40 is configured to be detachably attached to the gardening trimmer 200. The attachment unit 40 has a joint mechanism 70 which swingably supports the main pole 12. The joint mechanism 70 can adjust the angle of the main pole 12 with respect to the attachment unit 40 at one of multiple steps within an angular range C1. Furthermore, the joint mechanism 70 can swingably support the main pole 12 adjusted at each angle position within the angular range C3. A lock off button 80 is provided on the joint mechanism 70. Normally, the lock off button 80 is located at the lock position and an angle adjustment of the main pole 12 is prohibited. When the user pushes the lock off button 80, the lock off button 80 moves to the unlock position and enables the angle adjustment of the main pole 12. A configuration of the joint mechanism 70 will be described in detail later.

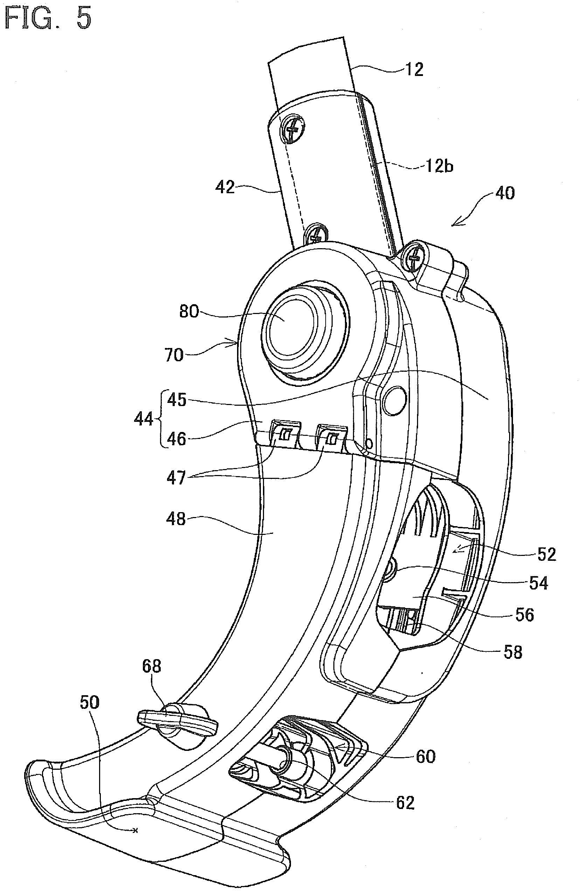

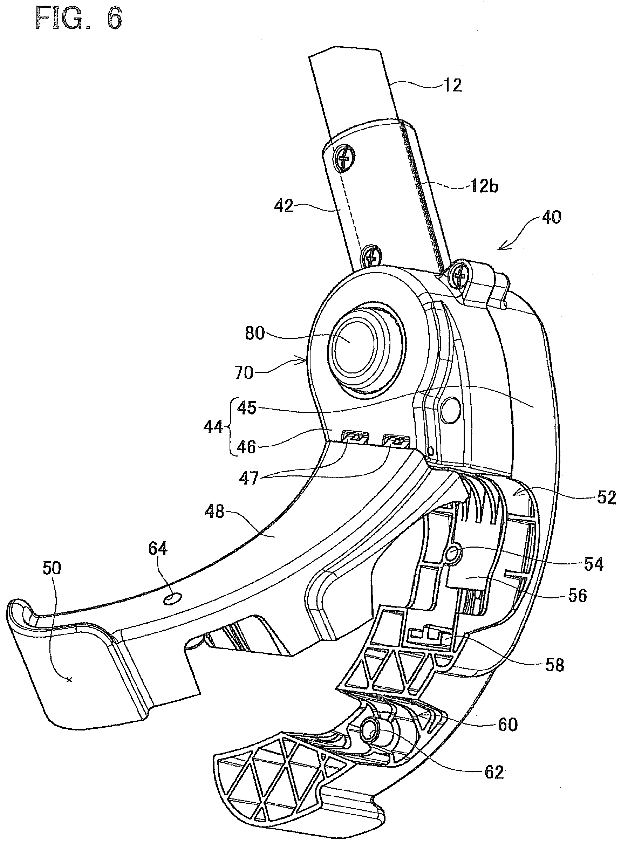

Figs. 5 and 6 show the attachment unit 40. As shown in Figs. 5 and 6, the attachment unit 40 has a pole fixed member 42 and a tool fixed member 44. The tool fixed member 44 is connected to the pole fixed member 42 via the joint mechanism 70. The pole fixed member 42 and the tool fixed member 44 are rotatably connected and configure a part of the joint mechanism 70. The main pole 12 swings with respect to the attachment unit 40 as the pole fixed member 42 rotates with respect to the tool fixed member 44. That is, the main pole 12 swings with respect to the gardening trimmer 200 fixed to the attachment unit 40.

The tool fixed member 44 has a left case 45 and a right case 46. The left case 45 and the right case 46 are fastened by screws. The right case 46 has a movable cover 48. The movable cover 48 is supported by a hinge 47 such that the movable cover 48 is capable of swinging. The movable cover 48 can move between a closed position and an opened position. At the closed position, the movable cover 48 contacts with the left case 45 (configuration shown in Fig. 5). At the opened position, the movable cover 48 locates away from the left case 45 (configuration shown in Fig. 6). The movable cover 48 is fastened, at the closed position, to the left case 45 with a fixed bolt 68. Through holes 62 and 64 in which the fixed bolt 68 passes are formed in the left case 45 and the movable cover 48 respectively.

A grip clamping portion 52 and a support holding portion 60 is provided between the left case 45 and the movable cover 48. The grip clamping portion 52 can clamp the grip 208 of the gardening trimmer 200. The support holding portion 60 can hold the grip support 210 of the gardening trimmer 200. The tool fixed member 44 can firmly hold two portions of grip 208 and grip support 210 of the gardening trimmer 200 by the grip clamping portion 52 and the support holding portion 60. The aforementioned fixed bolt 68 is provided at a position penetrating the support holding portion 60.

An engaging convex portion 54 and a movable lever 58 are provided on the grip clamping portion 52. The movable lever 58 is sandwiched between the left case 45 and inner plate 56 and slidably supported. The engaging convex portion 54 is formed at the inner plate 56. When the grip clamping portion 52 clamps the grip 208 of the gardening trimmer 200, the engaging convex portion 54 engages with a concave portion 209 formed on the grip 208 of the gardening trimmer 200, and the movable lever 58 faces the trigger switch 214 of the gardening trimmer 200.

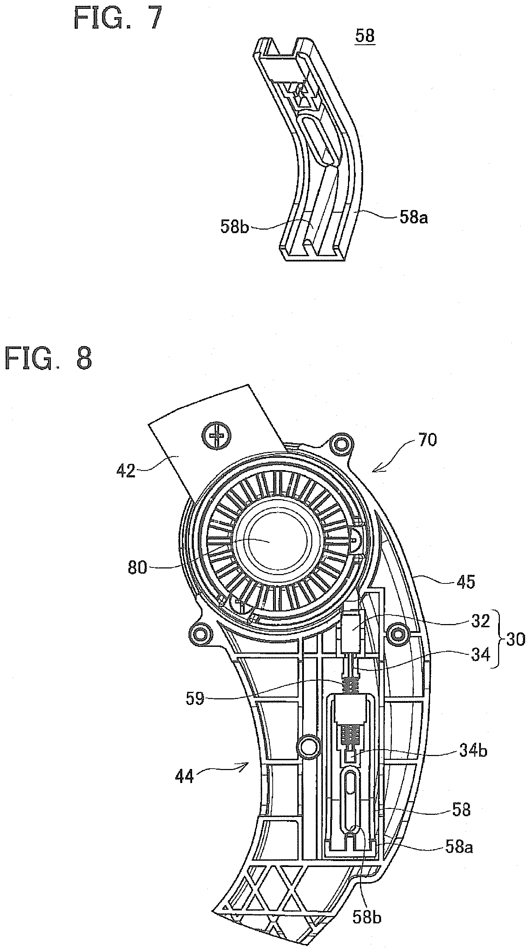

As shown in Fig. 7, the movable lever 58 has an L-shaped configuration. A lower portion 58a of the movable lever 58 extends in a direction perpendicular to a slide direction of the movable lever 58. A contact rib 58b is provided on the lower portion 58a of the movable lever 58. The contact rib 58b contacts with the trigger switch 214 of the gardening trimmer 200. Atop of the contact rib 58b has a curved surface.

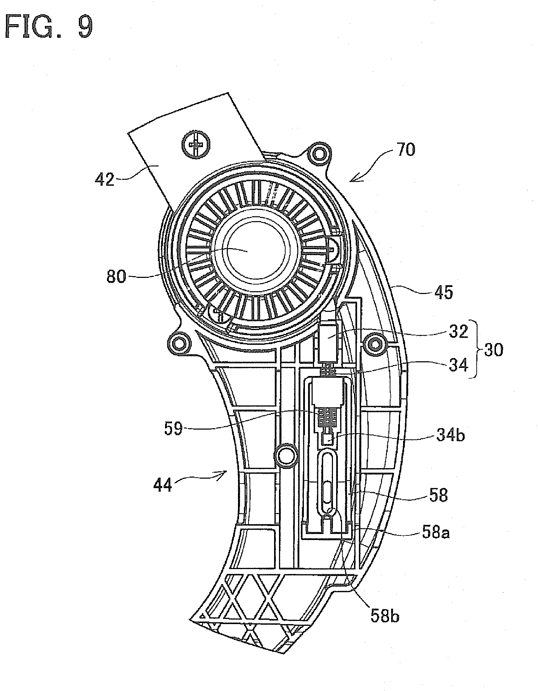

As shown in Figs. 8 and 9, the movable lever 58 is connected to the other end 34b of the inner cable 34 of the control cable 30. That is, the movable lever 58 is connected to the operable member 24 of the grip unit 20 via the control cable 30. According to the configuration, the movable lever 58 moves in conjunction with the movement of the operable member 24 of the grip unit 20. Normally, the movable lever 58 is pressed downward by a coil spring 59 and thus the movable lever 58 is maintained at a normal position which is on the lower side (configuration shown in Fig. 8). When the user pulls the operable member 24 of the grip unit 20 at the configuration shown in Fig. 8, the movable member 58 moves upward (configuration shown in Fig. 9). Then, when the user returns the operable member 24, the movable lever 58 moves back to the normal position.

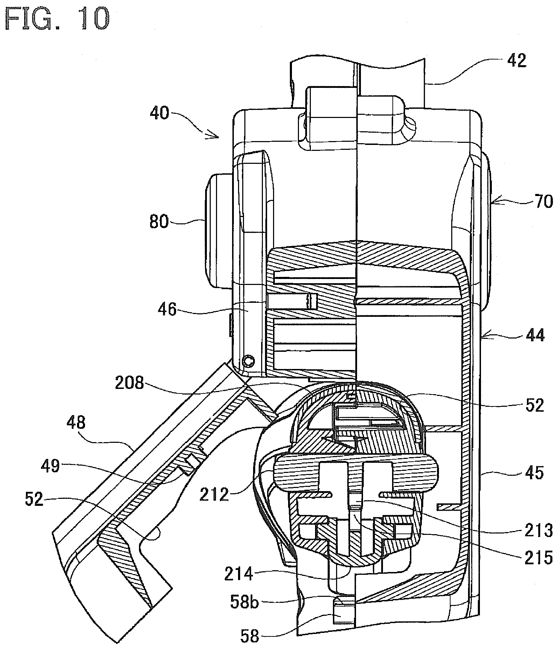

As shown in Fig. 10, a lock off protrusion 49 is provided on the movable cover 48. The lock off protrusion 49 is positioned inside the grip clamping portion 52. The lock of protrusion 49 is provided at a position with which the lock off switch 212 of the gardening trimmer 200 contacts when the movable cover 49 closes. It is noted that, in Fig. 10, the movable cover 48 is opened and the lock off switch 212 is positioned at the lock position. Contact portions 213 and 215 are formed on the lock off switch 212 and the trigger switch 214 respectively. The contact portions 213 and 215 abut with one another. The contact portions 213 and 215 face each other when the lock off switch 212 locates at the lock position. Under this condition, the movement of the trigger switch 214 is prohibited even when the user pulls the trigger switch 214 because the contact portions 213 and 215 abut each other.

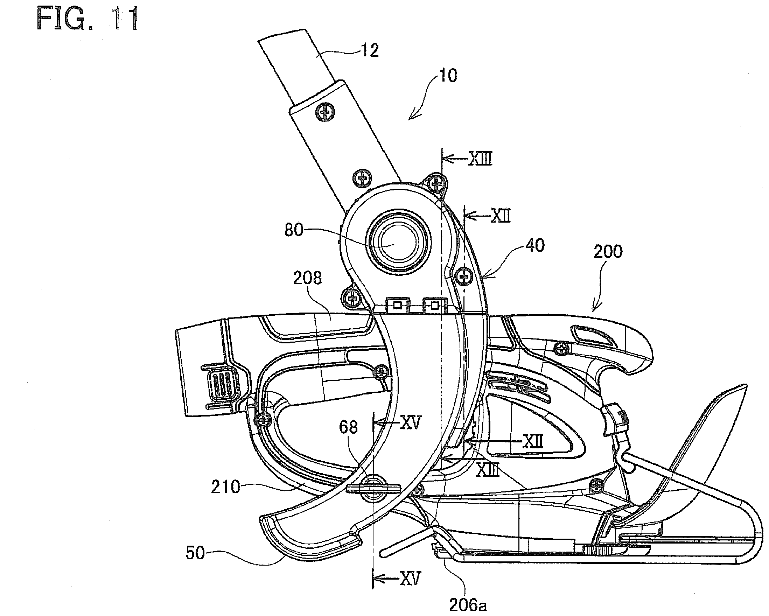

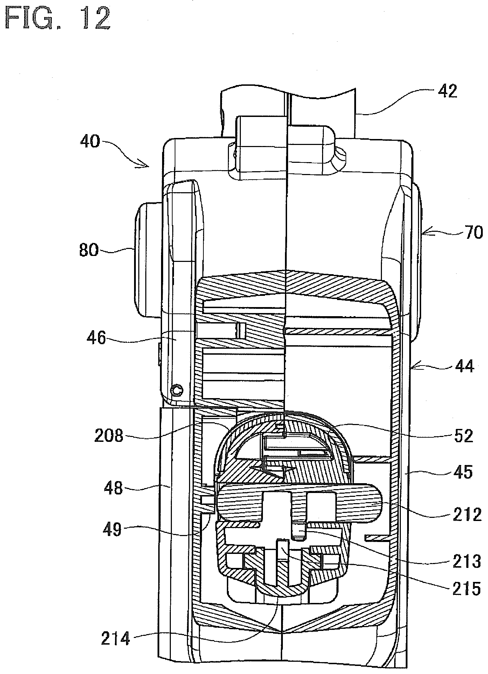

As shown in Figs. 11 and 12, when the gardening trimmer 200 is fixed to the attachment unit 40, the lock off protrusion 49 in the grip clamping portion 52 keeps pushing the lock off switch 212 of the gardening trimmer 200 such that the lock off switch 212 is maintained at the unlock position. Under this condition, the contact portion 213 of the lock off switch 212 does not face the contact portion 215 of the trigger switch 214. Therefore, the lock of the trigger switch 214 by the lock off switch 212 of the gardening trimmer 200 is released automatically when the gardening trimmer 200 is fixed to the attachment unit 40.

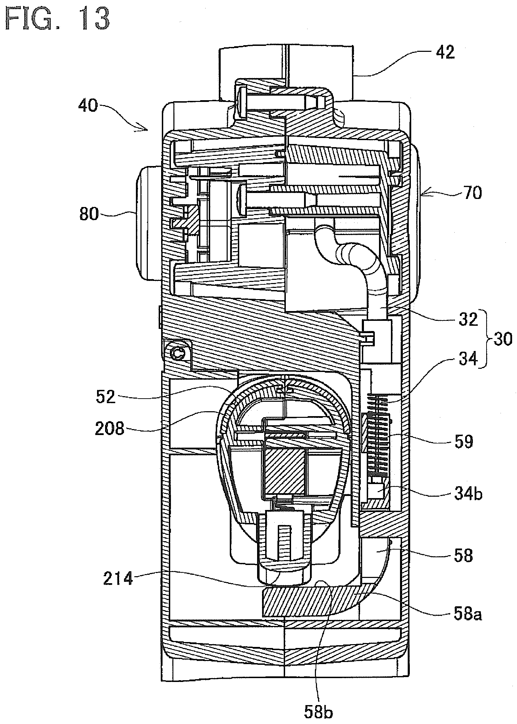

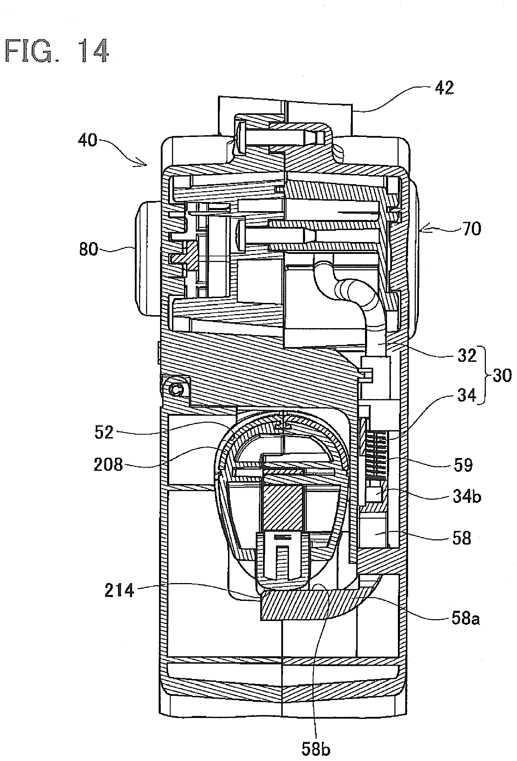

As shown in Figs. 11 and 13, while the gardening trimmer 200 is being fixed to the attachment unit 40, at the grip clamping portion 52, the contact rib 58b of the movable lever 58 faces the trigger switch 214 of the gardening trimmer 200. Further to be shown in Fig. 14, the lower portion 58a of the movable lever 58 moves toward the trigger switch 214 when the user operates the operable member 24 of the grip unit 20. As explained before, the contact rib 58b of the movable lever 58 can push up the trigger switch 214 because the lock off switch 212 is maintained at the unlock position. The gardening trimmer 200 starts when the trigger switch 214 is operated.

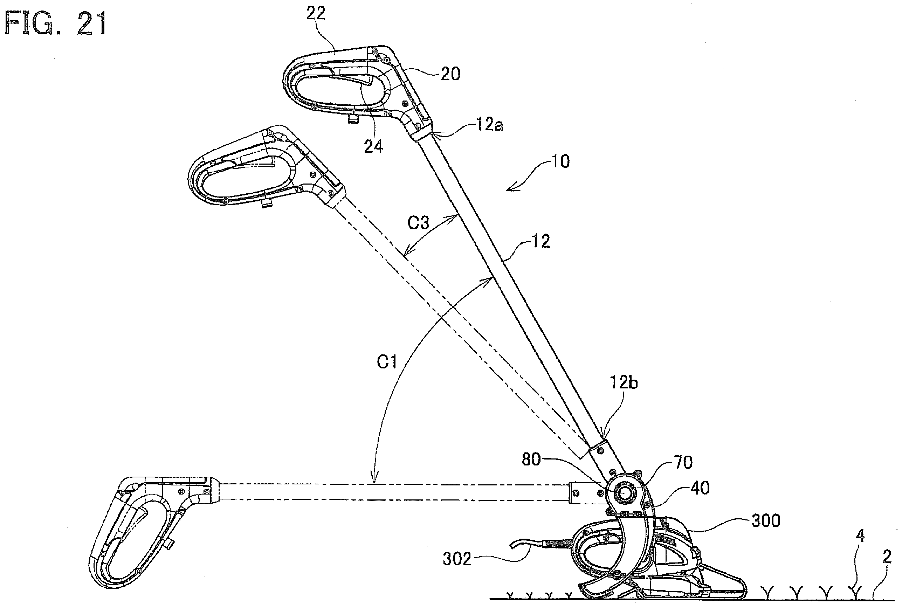

As described above, upon the usage of the extension handle 10, the trigger switch 214 of the gardening trimmer 200 is operated by the movable lever 58 of the attachment unit 40 when the user operates the operable member 24 of the grip unit 20. According to the extension handle 10, the battery pack type gardening trimmer 200 can be started or stopped by the operable member 24 of the grip unit 20. Further, the extension handle 10 can be used not only for the battery pack type gardening trimmer 200 but also for the engine driven gardening trimmer or the other type of the powered tools. Further, the extension handle 10 can similarly be used for the gardening trimmer 300 having a power supply cord (refer to Fig. 21).

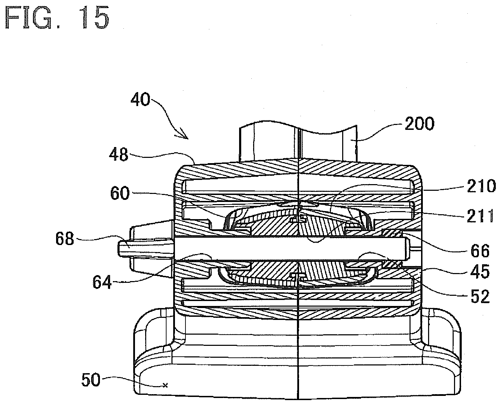

As shown in Figs. 11 and 15, while the gardening trimmer 200 is being fixed to the attachment unit 40, the left case 45 and the movable cover 48 are fastened to each other by the fixed bolt 68 and a nut 66 at the support holding portion 60. The fixed bolt 68 extends through a through hole 64 of the movable cover 48, a through hole 211 of the grip support 210 and a through hole 62 of the left case 45. The fixed bolt 68 can prevent the gardening trimmer 200 from detaching from the attachment unit 40 by passing through the grip support 210 of the gardening trimmer 200 even when the fixed bolt 68 may be loosened. It is noted that another penetrating member which penetrates the gardening trimmer 200 can be provided with the attachment unit 40 in addition to or alternatively to the fixed bolt 68.

As shown in Figs. 1, 5, and 6, a contact surface 50 which contacts with the ground 2 is provided to the attachment unit 40. The contact surface 50 is formed at the lower end of the attachment unit 40 and circularly curves. The attitude of the gardening trimmer 200 with respect to the ground 2 is stabilized as the contact surface 50 contacts with the ground 2. Further, the user can easily moves the gardening trimmer 200 along with the ground 2. It is noted that, instead of the contact surface 50, wheels for running on the ground 2 may be provided to the attachment unit 40.

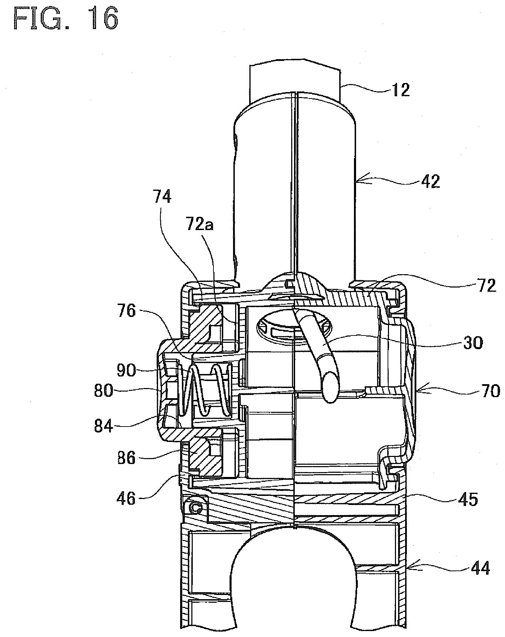

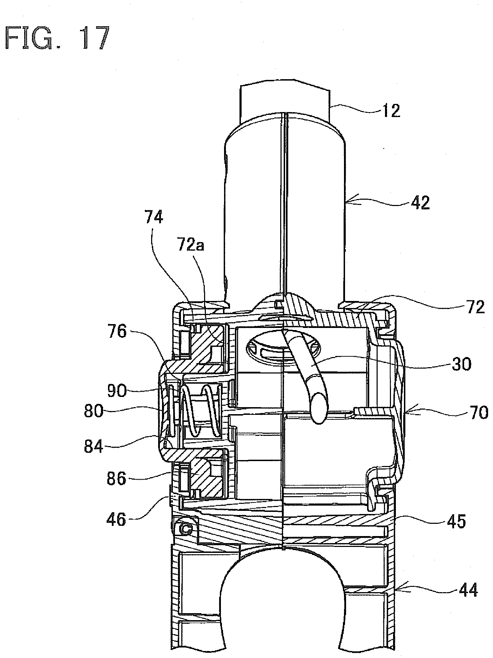

Next, the joint mechanism 70 of the attachment unit 40 will be explained. As shown in Figs. 16 and 17, a base portion 72 is formed on the pole fixed member 42. The base portion 72 has a cylindrical shape. The center axis of the base portion 72 coincides with the center axis of the joint mechanism 70. The base portion 72 of the pole fixed member 42 is clamped by the right case 46 and the left case 45 of the tool fixed member 44 and rotatably supported.

The pole fixed member 42 holds the lock off button 80 at the end surface 72a of the base portion 72. A plug portion 76 and a limb 74 are formed at the end surface 72a of the base portion 72. The limb 74 surrounds the lock off button 80. The plug portion 76 protrudes towards the lock off button 80. The limb 74 is formed at the periphery of the end surface 72a. The plug portion 76 is formed at the center of the end surface 72a. That is, the plug portion 76 is formed coaxially with the center axis of the joint mechanism 70. The pole fixed member 42 holds the lock off button 80 by the limb 74 and the plug portion 76. A socket hole 84 for receiving the plug portion 76 is formed at the rear surface of the lock off button 80. The socket hole 84 is provided at the center of the lock off button 80. Clearances are provided between the limb 74 and the lock off button 80, and between the plug portion 76 and the lock off button 80 respectively.

A coil spring 90 is provided between the pole fixed member 42 and the lock off button 80. The coil spring 90 presses the lock off button 80 towards the right case 46 of the tool fixed member 44. As shown in Fig. 16, the lock off button 80 normally contacts with the right case 46 of the tool fixed member 44 and positioned at the lock position at which the angle adjustment of the main pole 12 is prohibited. It is noted that a flange 86 which contacts with the right case 46 of the tool fixed member 44 is provided on the lock off button 80. On the other hand, as shown in Fig. 17, when the user pushes the lock off button 80, the lock off button 80 moves away from the right case 46 of the tool fixed member 44 and moves to the unlock position at which the angle adjustment of the main pole 12 is permitted.

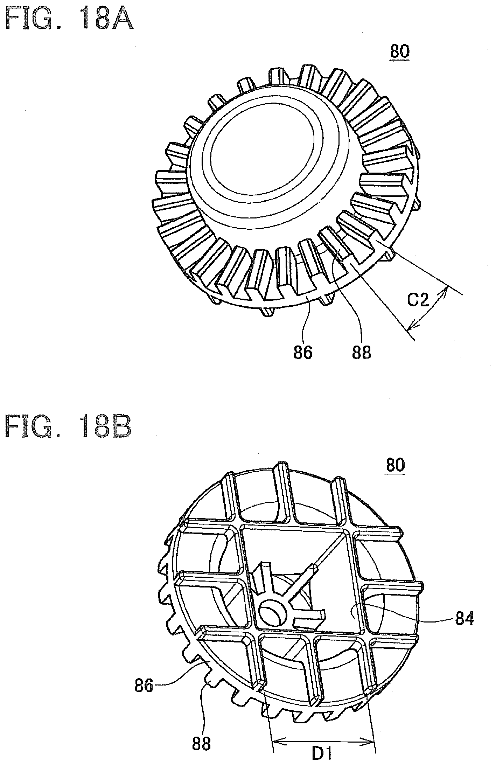

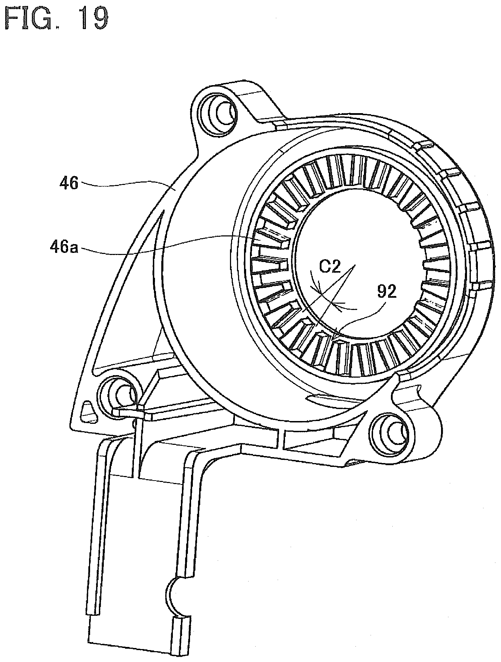

As shown in Fig. 18A, a plurality of ribs 88 is provided at the flange 86 of the lock off button 80. Each of the ribs 88 extends in the radial direction with respect to the center axis of the joint mechanism and is arranged with equal interval of a constant angle interval C2. On the other hand, as shown in Fig. 19, a plurality of grooves 92 is formed on the right case 46 of the tool fixed member 44 in the area to which the flange 86 of the lock off button 80 contacts. Each of the grooves 92 extends in the radial direction with respect to the center axis of the joint mechanism 70 and is arranged with equal interval of the constant angle interval C2. The ribs 88 of the lock off button 80 and the grooves 92 of the tool fixed member 44 engage each other when the lock off button 80 locates at the lock position and the lock off button 80 contacts with the tool fixed member 44 (the configuration shown in Fig. 16). Under the configuration, relative rotation of the tool fixed member 44 with respect to the lock off button 80 is prohibited. When the user pushes the lock off button 80 and the lock off button 80 moves to the unlock position (configuration shown in Fig. 17), the engagement between the ribs 88 and the grooves 92 is released and relative rotation of the tool fixed member 44 with respect to the lock off button 80 is permitted. The ribs 88 and the grooves 92 are formed with equal interval of the angle C2. Therefore, the angle between the pole fixed member 42 and the tool fixed member 44 can be adjusted in steps of every angle C2 by the joint mechanism 70. In other words, the extension handle 10 can adjust the angle of the main pole 12 with respect to the gardening trimmer 200 in steps of every angle C2.

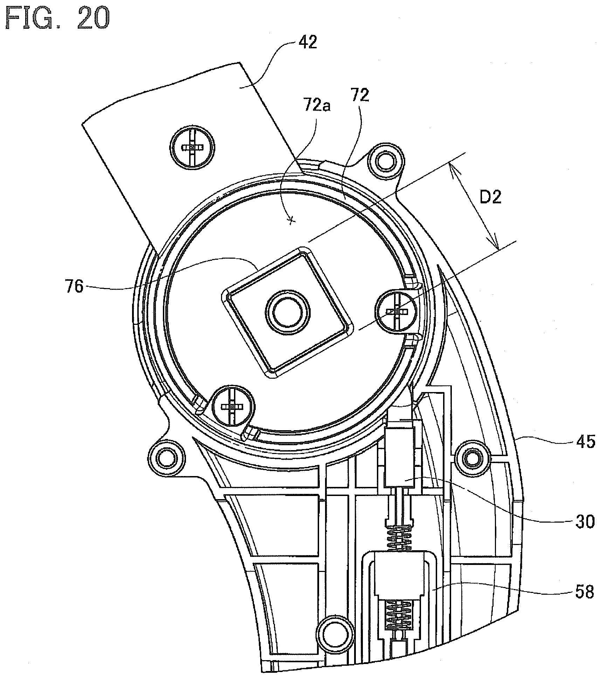

As shown in Fig. 18B, the socket hole 84 of the lock off button 80 has a substantially square cross-sectional shape. Meanwhile, as shown in Fig. 20, the plug portion 76 formed on the pole fixed member 42 also has a substantially square cross-sectional shape. The size D1 of the socket hole 84 is slightly larger than the size D2 of the plug portion 76. As described before, a clearance is provided between the plug portion 76 of the pole fixed member 42 and the socket hole 84 of the lock off button 80. Due to the configuration, the lock off button 80 is supported rotatably within a range of the angle C3 with respect to the pole fixed member 42. According to the configuration, the joint mechanism 70 can support the main pole 12 after the angle adjustment while permitting to swing within a range of the angle C3 (as shown in Fig. 1). It is noted that the cross-sectional shapes of the socket hole 84 and the plug portion 76 are not limited to squares, but may alternatively be another type of polygons, an ovals, or long ovals (slot shapes).

As described above, the extension handle 10 of this embodiment can adjust the angle of the main pole 12 with respect to the attachment unit 40 in steps of every constant angle C2 by the joint mechanism 70. By virtue of the configuration, the user can adjust the angle of the main pole 12 with respect to the attachment unit 40 in accordance with the distance to the ground 2 (that is a height of the user). Therefore, the user can trim the lawn 4 on the ground 2 without bending over but rather with a comfortable position. Further, the main pole 12 after being adjusted of its angle is supported by the joint mechanism 70 while permitting to swing within the range of angle C3. According to the configuration, when the user moves the gardening trimmer 200 along the ground 2, the angle of the attachment unit 40 with respect to the main pole 12 changes passively, and thus, the gardening trimmer 200 is maintained with appropriate angle with respect to the ground 2. Even on the undulating ground, the user can trim the lawn 4 at uniform lengths.

On the joint mechanism 70, the mechanism (the ribs 88 and the grooves 92) for adjusting the angle of the main pole 12 with respect to the attachment unit 40 is provided between the tool fixed member 44 and the lock off button 80, and the mechanism (the plug portion 76 and the socket hole 84) for passively swing the attachment unit 40 is provided between the pole fixed member 42 and the lock off button 80. Since these mechanisms are provided independently, designs suitable for each mechanism can be employed freely and independently. For example, it can be designed so that the angle range for swing the attachment unit 40 after adjusting the angle may be wider than the angle interval for adjusting the angle of the main pole 12.

### (Embodiment 2)

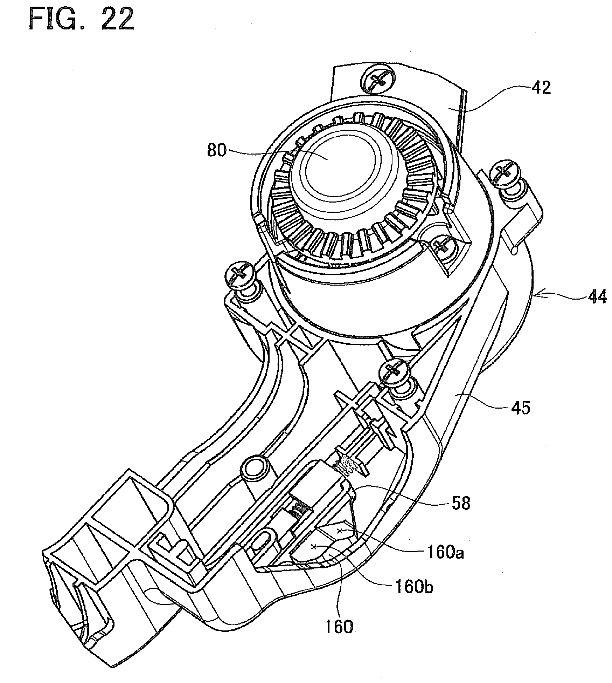

The extension handle in the second embodiment will be explained. The configuration of the extension handle in the second embodiment is substantially the same as the configuration of the extension handle 10 of the first embodiment except the configuration of the movable lever 58. As shown in Fig. 22, on the extension handle of the second embodiment, a lock off operable portion 160 is provided on the movable lever 58. With the addition of the lock off operable portion 160, the shape of the left case 45 is partially changed.

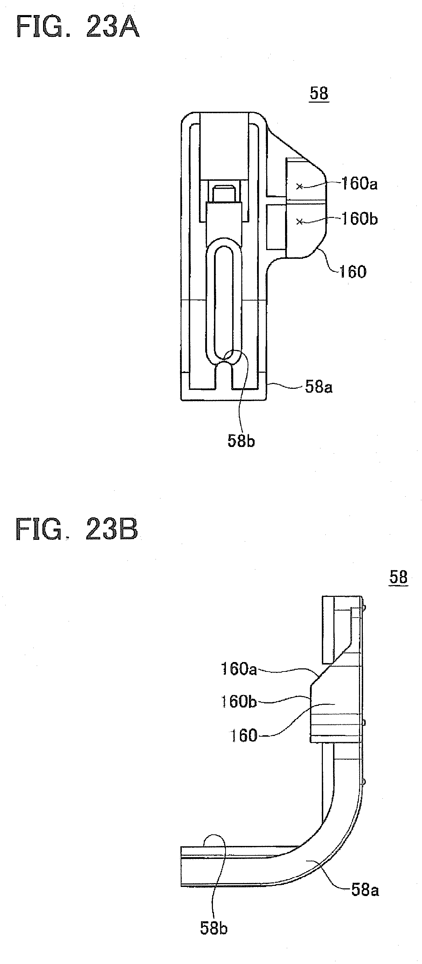

As shown in Figs. 22, 23A and 23B, the lock off operable portion 160 is formed integrally with the movable lever 58. An inclined surface 160a and a paralleled surface 160b are formed on the lock off operable portion 160 along the slide direction of the movable lever 58. The inclined surface 160a inclines with respect to the slide direction of the movable lever 58 and the paralleled surface 160b extends parallel to the slide direction of the movable lever 58. It is noted that the lock off protrusion 49 is omitted from the movable cover 48, with addition of the lock off operable portion 160.

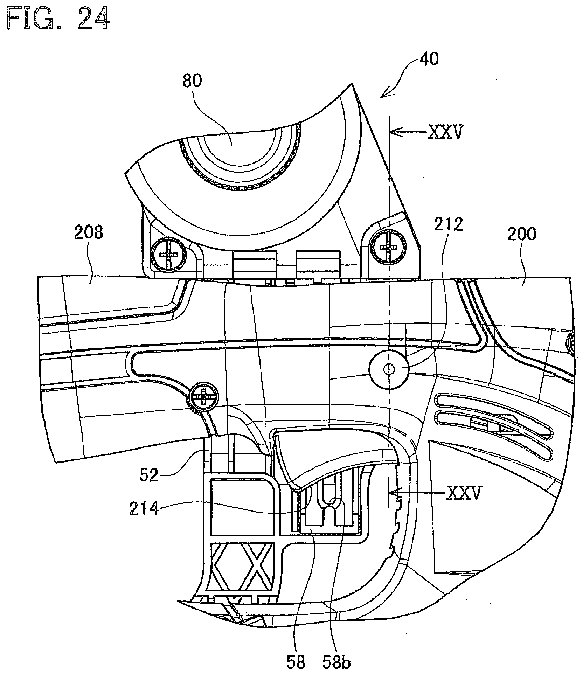

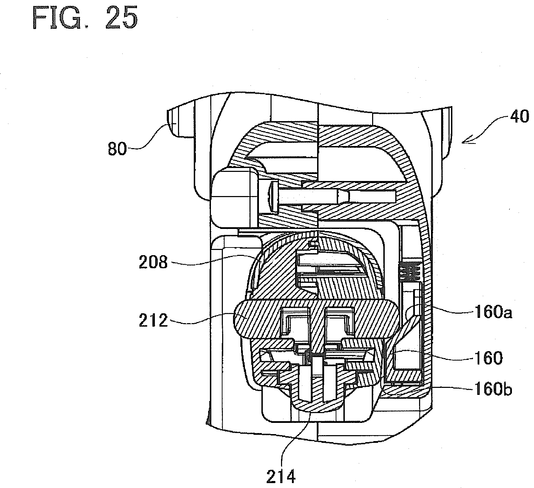

As shown in Figs. 24 and 25, while the gardening trimmer 200 is being fixed to the attachment unit 40, at the grip clamping portion 52, the lock off operable portion 160 positions below the lock off switch 212. Further, the contact rib 58b of the movable lever 58 faces the trigger switch 214 of the gardening trimmer 200.

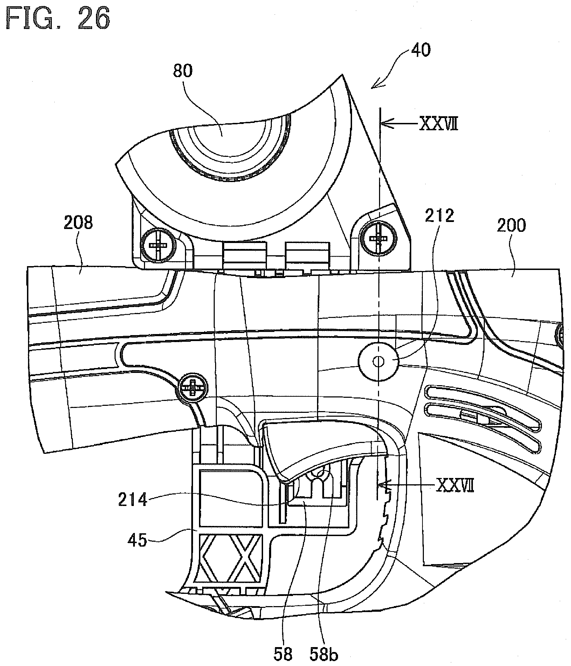

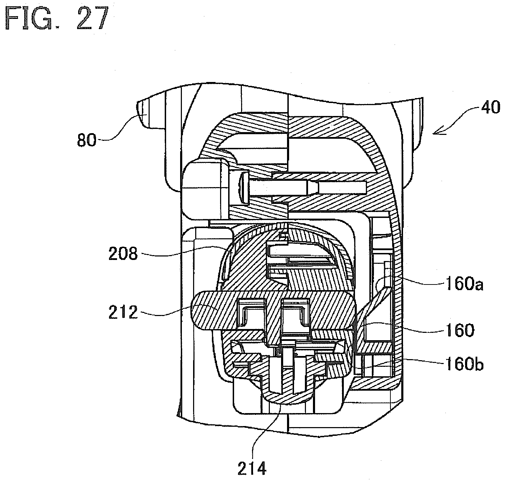

As shown Figs. 26 and 27, the movable lever 58 moves upward when the user operates the operable member 24 of the grip unit 20. That is, the lock off operable portion 160 moves towards the lock off switch 212 and the contact rib 58b moves towards the trigger switch 214. First, the inclined surface 160a of the lock off operable portion 160 pushes the lock off switch 212 into and the lock off switch 212 moves to the unlock position. At this stage, the contact rib 58b of the movable lever 58 does not contact with the trigger switch 214.

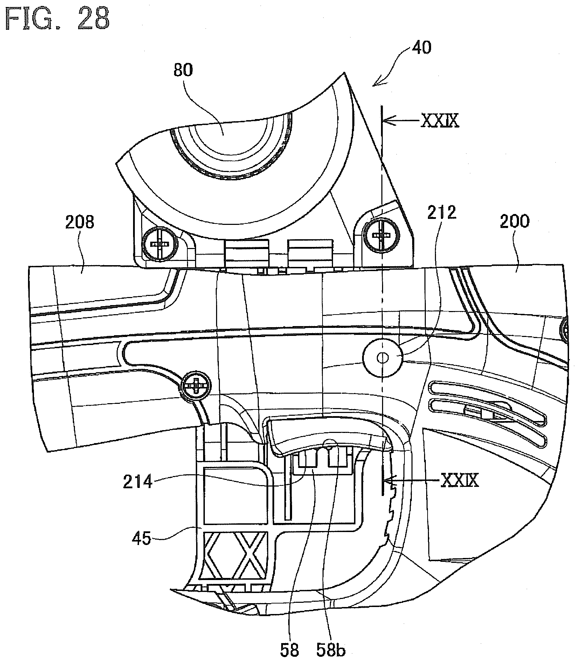

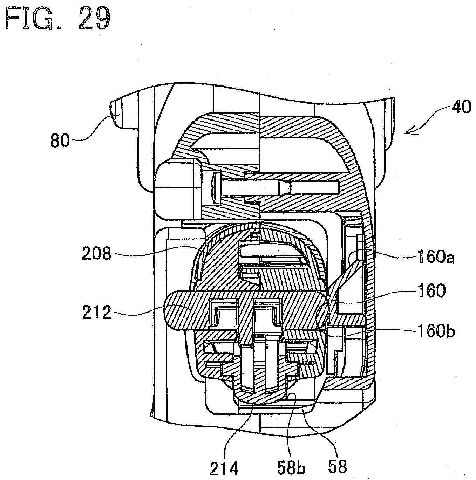

As shown in Figs. 28 and 29, the movable lever 58 moves upward further when the user operates the operable member 24 of the grip unit 20 further. At this time, the lock off switch 212 contacts with the paralleled surface 160b of the lock off operable portion 160 and the lock off switch 212 is maintained at the unlock position. That is, the lock of the trigger switch 214 is released. The contact rib 58b contacts with the trigger switch 214 and pushes up the trigger switch 214. As the trigger switch 214 is operated, the gardening trimmer 200 starts.

According to the configuration of the embodiment, the lock off switch 212 of the gardening trimmer 200 is operated only when the user operates the operable member 24 of the grip unit 20. Therefore, an erroneous operation of the trigger switch 214 and/or an erroneous start of the gardening trimmer 200 can be prevented.

### (Embodiment 3)

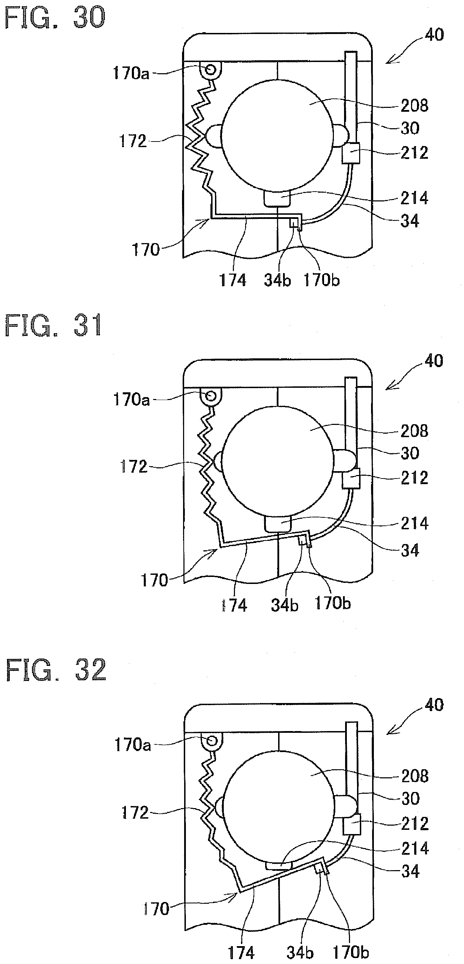

The extension handle in the third embodiment will be explained. The configuration of the extension handle in the third embodiment is substantially the same as the configuration of the extension handle 10 of the second embodiment except the configuration of the movable lever 58. As shown in Fig. 30, on the extension handle of the third embodiment, a wave lever 170 is implemented instead of the movable lever 58. The wave lever 170 is made of metal material or resin material. The wave lever 170 has a wavy portion 172 and a straight portion 174. The wavy portion 172 is formed with a wavelike shape so as to elastically deform easily. The straight portion 174 extends substantially vertically from the wavy portion 172. The wavy portion 172 faces the lock off switch 212 and the straight portion 174 faces the trigger switch 214. One end 170a of the wave lever 170 is fixed to the attachment unit 40 and the other end 170b of the wave lever 170 is connected to the other end 34b of the inner cable 34. The one end 170a of the wave lever 170 can be detached from the attachment unit 40 while fixing the gardening trimmer 200.

As shown in Fig. 31, the wave lever 170 deforms when the user operates the operable member 24 of the grip unit 20. The wavy portion 172 of the wave lever 170 pushes the lock off switch 212 into, then the lock off switch 212 moves to the unlock position. At this stage, the straight portion 174 of the wave lever 170 does not contact with the trigger switch 214.

As shown in Fig. 32, the wave lever 170 deforms further when the user operates the operable member 24 of the grip unit 20 further. At this time, the lock off switch 212 is maintained at the unlock position by the wavy portion 172 of the wave lever 170. That is, the lock of the trigger switch 214 is released. The straight portion 174 of the wave lever 170 contacts with the trigger switch 214 and pushes up the trigger switch 214. As the trigger switch 214 is operated, the gardening trimmer 200 starts.

According to the configuration of the embodiment, the lock off switch 212 of the gardening trimmer 200 is operated only when the user operates the operable member 24 of the grip unit 20. Therefore, an erroneous operation of the trigger switch 214 and/or an erroneous start of the gardening trimmer 200 can be prevented. Furthermore, in comparison with the embodiment employing the movable lever 58, the structure of the attachment unit 40 which supports the wave lever 170 can be simplified by employing the wave lever 170.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An extension handle (10) for a gardening trimmer (200, 300) comprising:
a main pole (12);
a grip unit (20) disposed at one end of the main pole (12) and configured to be held by a user, the grip unit (20) comprising an operable member (24) configured to be operated by the user; and
an attachment unit (40) disposed at the other end of the main pole (12) and configured to be detachably attached to the gardening trimmer (200, 300),
**characterized in that** the attachment unit (40) comprises a joint mechanism (70) capable of adjusting an angle of the main pole (12) with respect to the attachment unit (40) in at least two angles, and of supporting the main pole (12), which has been adjusted to one of the at least two angles, such that the main pole is capable of swinging within a predetermined angular range, wherein
the attachment unit (40) comprises a first fixed member (42) fixed to the main pole (12), a second fixed member (44) configured to be fixed to the gardening trimmer (200, 300), and a lock off member (80),
the second fixed member (44) is rotatably connected to the first fixed member (42) so as to constitute the joint mechanism (70), and
the lock off member (80) is configured to be movable to the lock position and engageable with one of the first and second fixed members (42, 44) when the angle of the main pole (12) is adjusted to any one of the at least two angles, and
the other of the first and second fixed members (42, 44) is configured to rotatably support the lock off member (80) engaging with the one of the first and second fixed members (42, 44) within the predetermined angular range.

2. The extension handle (10) as in claim 1, wherein the lock off member (80) is configured to:
be operated between a lock position and an unlock position by the user,
to prohibit adjustment of the angle of the main pole (12) when being at the lock position, and
to permit the adjustment of the angle of the main pole (12) when being at the unlock position.

3. The extension handle (10) as in claim 1 or 2, wherein the lock off member (80) is coaxially arranged with a center axis of the joint mechanism (70).

4. The extension handle (10) as in any one of claims 1 to 3,
wherein the attachment unit (40) further comprises a movable member (58) configured to operate a trigger switch (214) of the gardening trimmer (200, 300) in conjunction with movement of the operable member (24).

5. The extension handle (10) as in any one of claims 1 to 4, wherein the attachment unit (40) is configured to move a lock off switch (212) of the gardening trimmer (200, 300) to an unlock position when the attachment unit (40) is attached to the gardening trimmer (200, 300).

6. The extension handle (10) as in any one of claims 1 to 4, wherein the attachment unit (40) further comprises a second movable member (160, 170) configured to move a lock off switch (212) of the gardening trimmer (200, 300) to an unlock position in conjunction with the movement of the operable member (24).

7. The extension handle (10) as in any one of claims 1 to 6, wherein the attachment unit (40) further comprises at least two holding portions (52, 60), one of which being configured to hold a grip (208) of the gardening trimmer (200, 300) and another of which being configured to hold a portion (210) of the gardening trimmer (200, 300) other than the grip (208).

8. The extension handle (10) as in any one of claims 1 to 7, wherein the attachment unit (40) further comprises a contact portion (50) configured to contact to a working surface that is trimmed by the gardening trimmer.

9. The extension handle (10) as in any one of claims 1 to 8, wherein the attachment unit (40) comprises:
a first portion (45) configured to be arranged at one side of the gardening trimmer (200, 300),
a second portion (48) configured to be arranged at the other side of the gardening trimmer (200, 300), and
a fastener (68) configured to penetrate the gardening trimmer (200, 300) and fix the first and second portions (45, 48) to each other.

10. A combination adapted for gardening, the combination comprising:
an extension handle (10) as in any one of claims 1 to 9; and
a gardening trimmer (200, 300) configured to be detachably attached to the attachment unit (40) of the extension handle (10).

## Patentansprüche

1. Verlängerungshandgriff (10) für einen Gartentrimmer (200; 300), mit
einem Hauptstab (12),
einer Griffeinheit (20), die an einem Ende des Hauptstabes (12) angeordnet ist und zum Halten durch einen Benutzer konfiguriert ist, bei dem die Griffeinheit (20) ein bedienbares Bauteil (24) aufweist, das für eine Betätigung durch den Benutzer konfiguriert ist, und
einer Anbringungseinheit (40), die an dem anderen Ende des Hauptstabes (12) angeordnet ist und zum lösbaren Anbringen an dem Gartentrimmer (200, 300) konfiguriert ist,
**dadurch gekennzeichnet, dass** die Anbringungseinheit (40) einen Verbindungsmechanismus (70) aufweist, der einen Winkel des Hauptstabes (12) in Bezug auf die Anbringungseinheit (40) in zumindest zwei Winkeln justieren und den Hauptstab (12) lagern kann, welche zu einem der zumindest zwei Winkel justiert ist, so dass der Hauptstab innerhalb eines vorbestimmten Winkelbereiches schwenken kann, bei dem
die Anbringungseinheit (40) ein erstes fixiertes Bauteil (42), das an dem Hauptstab (12) fixiert ist, ein zweites fixiertes Bauteil (44), das zum Fixieren an dem Gartentrimmer (200, 300) konfiguriert ist, und ein Verriegelungsbauteil (80) aufweist,
das zweite fixierte Bauteil (44) mit dem ersten fixierten Bauteil (42) derart drehbar verbunden ist, dass sie den Verbindungsmechanismus (70) bilden, und
das Verriegelungsbauteil (80) dazu konfiguriert ist, zu der Verriegelungsposition bewegbar zu sein und eingreifbar mit einem von dem ersten und dem zweiten fixierten Bauteil (42, 44) zu sein, wenn der Winkel des Hauptstabes (12) zu einem von den zumindest zwei Winkeln justiert ist, und
das andere von dem ersten und dem zweiten fixierten Bauteil (42, 44) dazu konfiguriert ist, das Verriegelungsbauteil (80) innerhalb eines vorbestimmten Winkelbereiches drehbar zu lagern, das mit dem einen von dem ersten und dem zweiten fixierten Bauteil (42, 44) in eingriff steht.

2. Verlängerungshandgriff (10) nach Anspruch 1, bei dem das Verriegelungsbauteil (80) dazu konfiguriert ist
zwischen einer Verriegelungsposition und einer Entriegelungsposition durch den Benutzer betätigt zu werden,
eine Justierung des Winkels des Hauptstabes (12) zu verhindern, wenn es in der Verriegelungsposition ist, und
die Justierung des Winkels des Hauptstabes (12) zu ermöglichen, wenn es in der Entriegelungsposition ist.

3. Verlängerungshandgriff (10) nach Anspruch 1 oder 2, bei dem das Verriegelungsbauteil (80) koaxial mit einer Mittelachse des Verbindungsmechanismus (70) angeordnet ist.

4. Verlängerungshandgriff (10) nach einem der Ansprüche 1 bis 3,
bei dem die Anbringungseinheit (40) ferner ein bewegbares Bauteil (58) aufweist, das zum Betätigen eines Drückerschalters (214) des Gartentrimmers (200, 300) in Verbindung mit einer Bewegung des bedienbaren Bauteils (24) konfiguriert ist.

5. Verlängerungshandgriff (10) nach einem der Ansprüche 1 bis 4, bei dem die Befestigungseinheit (40) dazu konfiguriert ist, einen Verriegelungsschalter (212) des Gartentrimmers (200, 300) zu einer Entriegelungsposition zu bewegen, wenn die Anbringungseinheit (40) an dem Gartentrimmer (200, 300) angebracht ist.

6. Verlängerungshandgriff (10) nach einem der Ansprüche 1 bis 4, bei dem die Anbringungseinheit (40) ferner ein zweites bewegbares Bauteil (160, 170) aufweist, das zum Bewegen eines Verriegelungsschalters (212) des Gartentrimmers (200, 300) zu einer Entriegelungsposition in Verbindung mit der Bewegung des bedienbaren Bauteils (24) konfiguriert ist.

7. Verlängerungshandgriff (10) nach einem der Ansprüche 1 bis 6, bei dem die Anbringungseinheit (40) ferner zumindest zwei Haltebereiche (52, 60) aufweist, von denen einer zum Halten eines Griffs (208) des Gartentrimmers (200, 300) konfiguriert ist, und von denen der andere zum Halten eines anderen Bereichs (210) als dem Griff (208) des Gartentrimmers (200, 300) konfiguriert ist.

8. Verlängerungshandgriff (10) nach einem der Ansprüche 1 bis 7, bei dem die Anbringungseinheit (40) ferner einen Kontaktbereich (50) aufweist, der für einen Kontakt mit einer Arbeitsoberfläche, die durch den Gartentrimmer getrimmt wird, konfiguriert ist.

9. Verlängerungshandgriff (10) nach einem der Ansprüche 1 bis 8, bei dem die Anbringungseinheit (40)
einen ersten Bereich (45), der dazu konfiguriert ist, an einer Seite des Gartentrimmers (200, 300) angeordnet zu werden,
einen zweiten Bereich (48), der dazu konfiguriert ist, auf der anderen Seite des Gartentrimmers (200, 300) angeordnet zu werden, und
ein Befestigungsmittel (68) aufweist, das zum Durchdringen des Gartentrimmers (200, 300) konfiguriert ist und den ersten und den zweiten Bereich (45, 48) miteinander fixiert.

10. Kombination, die für eine Gartenarbeit angepasst ist, welche Kombination
einen Verlängerungshandgriff (10) nach einem der Ansprüche 1 bis 9, und
einen Gartentrimmer (200, 300) aufweist, der zum lösbaren Anbringen an die Anbringungseinheit (40) des Verlängerungshandgriffs (10) konfiguriert ist.

## Revendications

1. Manche d'extension (10) pour un taille-haie de jardinage (200, 300) comprenant :
un bras principal (12) ;
une unité de poignée (20) disposée au niveau d'une extrémité du bras principal (12) et configurée pour être tenue par un utilisateur, l'unité de poignée (20) comprenant un organe opérationnel (24) configuré pour être actionné par l'utilisateur ; et
une unité d'attache (40) disposée au niveau de l'autre extrémité du bras principal (12) et configurée pour être attachée de façon amovible au taille-haie de jardinage (200, 300),
**caractérisé en ce que** l'unité d'attache (40) comprend un mécanisme de jointure (70) capable de régler un angle du bras principal (12) par rapport à l'unité d'attache (40) selon au moins deux angles, et de supporter le bras principal (12), qui a été réglé sur l'un des au moins deux angles, de sorte que le bras principal soit capable d'osciller dans une plage angulaire prédéterminée, dans lequel
l'unité d'attache (40) comprend un premier organe fixe (42) fixé au bras principal (12), un second organe fixe (44) configuré pour être fixé au taille-haie de jardinage (200, 300), et un organe de blocage (80),
le second organe fixe (44) est raccordé en rotation au premier organe fixe (42) de façon à constituer le mécanisme de jointure (70), et
l'organe de blocage (80) est configuré pour être mobile vers la position de verrouillage et pour pouvoir s'enclencher avec l'un des premier et second organes fixes (42, 44) lorsque l'angle du bras principal (12) est réglé sur l'un quelconque des au moins deux angles, et
l'autre des premier et second organes fixes (42, 44) est configuré pour supporter en rotation l'organe de blocage (80) s'enclenchant avec l'un des premier et second organes fixes (42, 44) dans la plage angulaire prédéterminée.

2. Manche d'extension (10) selon la revendication 1, dans lequel l'organe de blocage (80) est configuré pour :
être actionné entre une position de verrouillage et une position de déverrouillage par l'utilisateur,
empêcher un réglage de l'angle du bras principal (12) lorsqu'il est à la position de verrouillage, et
permettre le réglage de l'angle du bras principal (12) lorsqu'il est à la position de déverrouillage.

3. Manche d'extension (10) selon la revendication 1 ou 2, dans lequel l'organe de blocage (80) est agencé coaxialement avec un axe central du mécanisme de jointure (70).

4. Manche d'extension (10) selon l'une quelconque des revendications 1 à 3,
dans lequel l'unité d'attache (40) comprend en outre un organe mobile (58) configuré pour actionner un bouton de déclenchement (214) du taille-haie de jardinage (200, 300) conjointement à un déplacement de l'organe opérationnel (24).

5. Manche d'extension (10) selon l'une quelconque des revendications 1 à 4, dans lequel l'unité d'attache (40) est configurée pour déplacer un bouton de blocage (212) du taille-haie de jardinage (200, 300) à une position de déverrouillage lorsque l'unité d'attache (40) est attachée au taille-haie de jardinage (200, 300).

6. Manche d'extension (10) selon l'une quelconque des revendications 1 à 4, dans lequel l'unité d'attache (40) comprend en outre un second organe mobile (160, 170) configuré pour déplacer un bouton de blocage (212) du taille-haie de jardinage (200, 300) à une position de déverrouillage conjointement au déplacement de l'organe opérationnel (24).

7. Manche d'extension (10) selon l'une quelconque des revendications 1 à 6, dans lequel l'unité d'attache (40) comprend en outre au moins deux portions de maintien (52, 60), dont l'une est configurée pour tenir une poignée (208) du taille-haie de jardinage (200, 300) et dont une autre est configurée pour tenir une portion (210) du taille-haie de jardinage (200, 300) autre que la poignée (208).

8. Manche d'extension (10) selon l'une quelconque des revendications 1 à 7, dans lequel l'unité d'attache (40) comprend en outre une portion de contact (50) configurée pour venir en contact avec une surface de travail qui est taillée par le taille-haie de jardinage.

9. Manche d'extension (10) selon l'une quelconque des revendications 1 à 8, dans lequel l'unité d'attache (40) comprend :
une première portion (45) configurée pour être agencée sur un côté du taille-haie de jardinage (200, 300),
une seconde portion (48) configurée pour être agencée sur l'autre côté du taille-haie de jardinage (200, 300), et
un élément de fixation (68) configuré pour pénétrer dans le taille-haie de jardinage (200, 300) et fixer les première et seconde portions (45, 48) l'une à l'autre.

10. Combinaison adaptée pour le jardinage, la combinaison comprenant :
un manche d'extension (10) selon l'une quelconque des revendications 1 à 9 ; et
un taille-haie de jardinage (200, 300) configuré pour être attaché de façon amovible à l'unité d'attache (40) du manche d'extension (10).
